# EUROPEAN PATENT SPECIFICATION

(11) **EP 4 165 474 B1**
(45) Date of publication and mention of the grant of the patent: **15.01.2025**
(21) Application number: 21737158.2
(22) Date of filing: 16.06.2021
(51) Int. Cl.: B02C 19/00, B02C 23/08, B29B 17/00, B29B 17/02, B29B 17/04, G03G 15/08, B02C 4/02, B09B 3/00, G03G 21/18

(54) **APPARATUS FOR EXTRACTING TONER FROM TONER CARTRIDGES**
VORRICHTUNG ZUM EXTRAHIEREN VON TONER AUS TONERKARTUSCHEN
APPAREIL POUR EXTRAIRE DU TONER DE CARTOUCHES DE TONER

(30) Priority: 16.06.2020 IT 202000014287
(43) Date of publication of application: 19.04.2023
(73) Proprietor: Ecomade Engineering S.r.l., 35042 Este PD (IT)
(72) Inventor: FORMAGGIO, Daniele, 35042 Este PD (IT)
(74) Representative: Pozzato, Matteo
(86) International application number: PCT/IB2021/055297
(87) International publication number: WO 2021/255655

(56) References cited:
- EP-A1- 1 552 255
- EP-B1- 1 552 255
- JP-A- 2001 205 245
- JP-A- 2002 079 125
- JP-A- 2011 158 745
- JP-A- H09 150 137
- US-B1- 6 311 904

## Description

### TECHNICAL FIELD

The present invention is in the field of apparatuses for separating pulverized material from a container of said pulverized material. More specifically, the present invention refers to the separation of toner from a toner cartridge and the recycling of said toner and toner cartridge.

### BACKGROUND ART

In recent years, the topic of recycling has become increasingly important.

One area where the issue of differentiating raw materials for reuse or disposal has not yet been addressed is that of raw materials used for printing. In particular, devices such as laser printers, photocopiers and fax machines use toner configured to be deposited by a drum onto the sheets to be printed. Once deposited, the toner is heated until it is melted, so that it may be printed on the paper.

Specifically, toner is a pigment consisting of a very fine powder that is placed inside special cartridges usually made of plastic.

Nowadays, used or defective toner cartridges are packed in special containers to prevent the dispersion of liquids and powders before being taken to incineration plants for disposal.

This disposal method is characterised by several drawbacks. First and foremost, storage must be in a dry place that is not subject to temperature fluctuations or atmospheric agents, as the collected products are particularly sensitive to light and heat. Secondly, the collection and disposal of toner cartridges does not provide for the separation for possible reuse of the various materials making up the toner cartridge. Such a cartridge contains metal materials, the extraction of which could be useful for re-use, and plastic parts that could be re-used for the production of, for example, other cartridges.

Finally, the incineration of toner cartridges with their contents may pose a serious risk to the environment and human health, as well as being a very expensive solution.

Nowadays, there is a need for an apparatus that may automatically separate the materials that make up toner cartridges from their contents so that these materials may be individually processed for disposal, recycling or reuse.

Known devices for treating containers which contain a powder are known, for example, from EP1552255A1, US6311904B1, JP2002079125, JP2001205245, and JP2011158745A.

### SUMMARY

The problem underlying the present invention is therefore to propose an apparatus for extracting pulverized toner from a toner cartridge that overcomes the above-mentioned drawbacks.

The task of the present invention is therefore to provide an apparatus for extracting toner from a toner cartridge. In other words, the apparatus in question is configured to separate the pulverized toner from the materials that make up the toner cartridge. Consequently, it will then be possible to reuse these materials or to process them specially.

These and other aims which are explained in more detail below are achieved by an apparatus for extracting toner, as defined in the attached independent claim.

Advantageous aspects of an apparatus for extracting toner are indicated in the attached dependent claims.

These claims are incorporated herein for express reference.

In particular, the object of the present invention is an apparatus for extracting toner from a toner cartridge.

In addition to an inlet opening, the apparatus in question may comprise a first outlet opening for discharging toner and a second outlet opening for discharging toner cartridges, and may comprise a toner cartridge opening device. This toner cartridge opening device is configured to break a toner cartridge so that the toner may be removed from inside the toner cartridge. This provides an initial separation of the toner cartridge materials. Specifically, toner in the form of powder or granules may be released from the plastic toner cartridge, with the cartridge also being separated from any cardboard or other packaging material.

The extraction apparatus may further comprise a separating device. Said separating device may be connected to the opening device to receive broken toner cartridges from the latter, and is configured to separate toner from a respective toner cartridge broken by the opening device and possibly also from a cardboard casing or casing of other material in which the toner cartridge is introduced in the extraction apparatus. In addition, the separating device may be configured to separately convey the broken toner cartridge, and any casing enclosing it, to the second outlet opening and the toner, separated from the broken toner cartridge, to the first outlet opening. As a result, the materials of the toner cartridge are separated and conveyed to different outlets of the apparatus: the toner in the form of powder and/or granules is conveyed to a first outlet opening, while the materials with which the toner cartridge is made - mainly plastics and metals - are conveyed to a second outlet opening.

In general, therefore, the apparatus for extracting toner from a toner cartridge according to the present invention may be configured first to break a toner cartridge, and its casing, if any, so that the toner therein may be released or extracted. Subsequently, the apparatus may also be configured to separate the toner from the respective broken cartridge and convey these elements separately to two different outlet openings. Advantageously therefore, the apparatus according to the present invention may be capable of automatically separating the materials constituting the toner cartridges from their contents. This makes it possible to treat the individual materials individually in order to dispose of them, recycle them or reuse them, with minimal impact on the environment and human health. For example, the plastic and metal materials that make up the toner cartridge may be reused for the production of new cartridges or other products.

The apparatus may further comprise a compacting device connected to the separating device for receiving toner and configured to compact the toner to limit a risk of toner ignition. As a result, toner compaction reduces the amount of oxygen present between the toner particles, thereby reducing the risk of fire.

According to a further aspect, the compacting device may be interposed between the separating device and the first outlet opening. In particular, the compacting device is further configured to compact the toner received, in-use, from the separating device and convey it to the first outlet opening.

The apparatus for extracting toner may preferably comprise at least a pair of counter-rotating elements which between themselves define a first passage for a toner cartridge. This pair of counter-rotating elements is configured to open a toner cartridge that passes through the passage defined by the pair of counter-rotating elements forming it. Preferably, such a pair of counter-rotating elements is configured to open, or break, a toner cartridge without shattering it.

According to a preferred aspect, the apparatus may comprise a first pair of counter-rotating elements of such at least one pair of counter-rotating elements and a second pair of counter-rotating elements of such at least one pair of counter-rotating elements. The second pair is arranged in series with the first pair so that a toner cartridge, which in use crosses the first passage of such a first pair, is then directed into a second passage defined between the counter-rotating elements of the second pair of counter-rotating elements. As a result, a two-stage opening and/or breaking of the toner cartridges may be achieved. This makes it possible to obtain smaller fragments of toner cartridges than those which may be obtained from single-stage breaking or opening. This also ensures that the toner powder is effectively released from the cartridge.

However, for the same breaking or opening results, the adoption of a greater number of pairs of counter-rotating elements may be preferred compared to solutions with a smaller number of them in order to allow each pair to be configured to exert lower mechanical stresses, and thus to allow a less complex and costly structure in the face of greater encumbrance, for example vertically, due to a greater number of pairs of counter-rotating elements.

On the other hand, where encumbrance is a critical design parameter, fewer pairs of counter-rotating elements capable of withstanding higher stresses may be used to achieve the same opening effect.

The counter-rotating elements of said first pair of counter-rotating elements and/or of said second pair of counter-rotating elements may be grooved cylinders.

According to a further aspect, the counter-rotating elements of each pair of counter-rotating elements may be mutually coupled via at least one elastic element. In particular, the counter-rotating elements of a pair of counter-rotating elements may be coupled so as to impart a compression force to a toner cartridge passing between the counter-rotating elements. It is therefore possible to choose the compression force that the counter-rotating elements of a pair of counter-rotating elements apply to a toner cartridge passing through them by selecting a suitably dimensioned elastic element.

Preferably, the counter-rotating elements may comprise cylinders that may be grooved cylinders. Alternatively, the counter-rotating elements may consist of cylinders or grooved cylinders.

According to one aspect of the present disclosure, the diameter of the cylinders or grooved cylinders of the first pair of counter-rotating elements may be smaller than the diameter of the cylinders or grooved cylinders of the second pair of counter-rotating elements. In combination or alternatively, the first passage of the first pair of counter-rotating elements may have a smaller cross-section than a cross-section of the second passage of the second pair of counter-rotating elements.

According to a preferred aspect, the separating device may comprise at least one filter element having a surface suitable to receive a toner cartridge broken by the opening device. The filter element may be crossed by a plurality of passages extending from that surface and passing through the filter element itself. These passages may be configured to allow toner to pass through them and at the same time to counteract toner cartridge fragments passing through them. The separating device may further comprise an actuating device mechanically connected to the at least one filter element to drive it in motion so as to implement, via the latter, a sieving action of material received from the opening device.

According to a further aspect, the separating device may comprise a first filter element of said at least one filter element and a second filter element of said at least one filter element. Preferably, the first filter element and the second filter element are positioned mutually in such a way that the material from the opening device may only reach the second filter element after passing through the first filter element, e.g. they may be superimposed in a vertical direction.

Thus, the material coming from the opening device may undergo double filtration or sieving.

The second filter element may also have a higher filtration capacity than the first filter element, i.e. the first filter element may only allow particles with a particle size smaller than a first value to pass through it, whereas the second filter element may only allow particles with a particle size greater than a second value to pass through it, where the second value is smaller than the first value.

According to a further aspect, the actuating device may comprise at least one vibrator connected to each of such at least one filter element to drive it in vibration. Preferably, such a vibrator is configured to generate vibrations with a frequency between 3 and 5 Hz, preferably about 4 Hz.

Clearly, a single vibrator connected to all filter elements may be provided, or each filter element may be connected to a vibrator which may be configured to generate vibrations at the same or different frequencies, for example to avoid resonance effects, with respect to the frequency of the vibration generated by each vibrator.

Preferably, the separating device comprises at least one cleaning member configured to remove toner from toner cartridges broken by the opening device. As a result, recyclable toner cartridge materials, such as plastics or metals, released from said apparatus have a further reduced risk of contamination by pulverized toner.

Preferably, such cleaning member may face the surface of the at least one filter member to remove toner from broken toner cartridges retained on such surface. Preferably, such a cleaning member may also comprise a brush. The apparatus may also comprise a casing enclosing at least the opening device, the separating device and the compacting device, if the latter is provided. According to this aspect, the apparatus may further comprise a suction device, preferably equipped with a filter, placed in communication with the inside of the casing and configured to suck air from the latter to keep the apparatus under pressure towards the environment, so as to prevent the dispersion of toner outside.

### BRIEF DESCRIPTION OF THE DRAWINGS

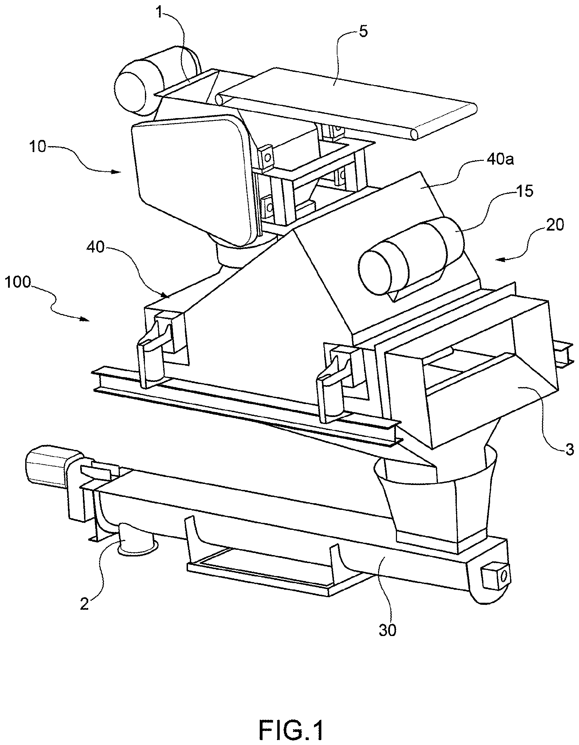

Figure 1 is a perspective view of an apparatus for extracting pulverized toner from a toner cartridge according to an embodiment of the present invention.

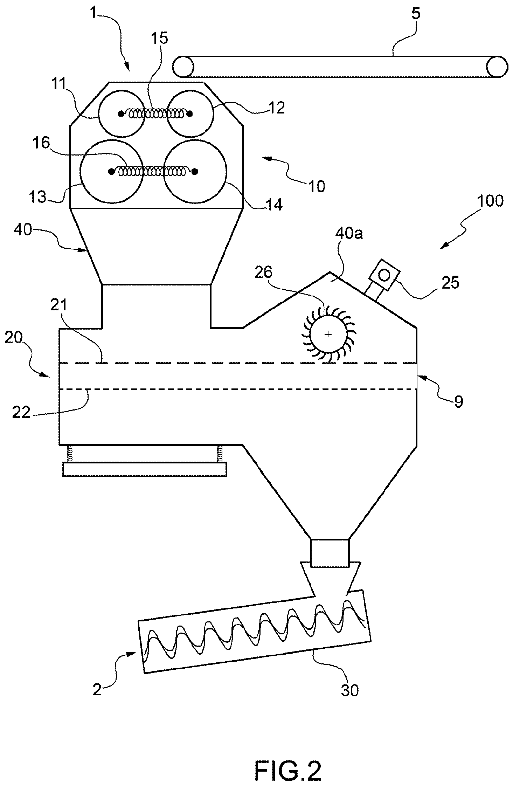

Figure 2 is a sectional view of an apparatus for extracting pulverized toner from a toner cartridge according to an embodiment of the present invention.

### DETAILED DESCRIPTION

With reference to the attached figures, an apparatus for extracting toner from a toner cartridge is indicated as a whole by 100.

Specifically, in use or printing configuration, the toner cartridge comprises an internal surface that defines, in use, a housing configured to contain pulverized toner. The toner cartridge further comprises an outer surface which, in use, comes into contact with the members of a printer or fax machine.

The extraction apparatus 100 according to the present invention is configured to extract toner, preferably in the form of powder and/or granules, from said toner cartridge housing and to separate the latter from the toner in the form of powder and/or granules itself.

For this purpose, the apparatus 100 comprises an inlet opening 1, a first outlet opening 2 for discharging toner, and a second outlet opening 3 for discharging toner cartridges. More specifically, the first outlet opening 2 is configured for discharging toner, preferably in the form of powder or granules, while the second outlet opening 3 is configured for discharging toner cartridge fragments and possibly fragments of a toner cartridge casing, which could be made of cardboard.

In particular, the inlet opening 1 is configured for the insertion of a toner cartridge, possibly inserted in a paper or cardboard container. Preferably, a conveyor belt 5 may be provided at said inlet opening 1 in order to increase the overall safety of the apparatus 100.

As previously mentioned, the apparatus 100 further comprises a first outlet opening 2 for discharging toner and a second outlet opening 3 for discharging toner cartridges. These first and second outlet openings 2, 3 are different and separate so that the relevant outlet materials may be collected and processed separately. For example, the materials coming out of the second outlet opening 3 may be mainly plastic and metal and may be collected and recycled appropriately.

In general terms, the apparatus 100 for extracting toner from a toner cartridge comprises a toner cartridge opening device 10 and a separating device 20. Optionally, the apparatus 100 may further comprise a compacting device 30. Furthermore, according to a preferred aspect, the apparatus 100 further comprises a casing 40 enclosing at least the opening device 10, the separating device 20 and, if provided, the compacting device 30, and a suction device placed in communication with the inside of the casing 40 configured to suck air from the latter in order to keep the apparatus 100 under pressure towards the environment, thus preventing the dispersion of toner in the form of powder to the outside. Preferably, the suction device comprises at least one filter member configured to intercept toner in the form of powder.

Specifically, the toner cartridge opening device 10 is configured to break a toner cartridge so that the toner may be removed from inside the toner cartridge. In particular, the opening device 10 is configured to fragment a toner cartridge in such a way as to expose the inner surface of the toner cartridge itself so that the toner, preferably made of powder and/or granules, contained in the toner cartridge may be released from the housing.

Preferably, according to an embodiment, the opening device 10 comprises at least one pair 17 of counter-rotating elements 11, 12. Such counter-rotating elements 11, 12 may comprise cylinders or grooved cylinders or may consist of cylinders or grooved cylinders. Further, the counter-rotating elements 11, 12 are arranged so as to define a first passage for a toner cartridge and are configured to open a toner cartridge passing through said first passage.

More particularly, preferably the opening device 10 comprises a first pair 17 of counter-rotating elements 11, 12 and a second pair 18 of counter-rotating elements 13, 14. The counter-rotating elements 13, 14 of the second pair 18 may comprise cylinders or grooved cylinders or may consist of cylinders or grooved cylinders. Said counter-rotating elements 13, 14 are arranged to define a second passage for a toner cartridge and are configured to open a toner cartridge passing through said second passage.

Clearly, a separating apparatus according to the present invention may comprise a number of pairs of counter-rotating elements, in series, chosen according to the contingent requirements for implementing the present invention.

According to a preferred aspect, the first and/or second passages are arranged along a main feed direction D. When the apparatus 100 is arranged on a substantially horizontal support plane, said main feed direction D is a substantially vertical direction, or substantially orthogonal to said support plane.

In this way, the action of gravity will promote a natural advancement of the cartridges through the separating apparatus. Alternatively, chutes and/or conveyors may be provided, for example belt and/or roller conveyors for moving the toner cartridges and in general the material introduced into the separating apparatus, through the apparatus in non-vertical directions.

Preferably, in order to achieve a first coarse and then finer break, the diameter of the cylinders or grooved cylinders of the first pair 17 of counter-rotating elements 11, 12 is smaller than the diameter of the cylinders or grooved cylinders of the second pair 18 of counter-rotating elements 13, 14. More specifically, according to a preferred embodiment, the counter-rotating elements 11, 12 of the first pair 17 have a diameter of 270 mm, while the counter-rotating elements 13, 14 of the second pair have a diameter of 350 mm. In combination or alternatively, the first passage of the first pair 17 of counter-rotating elements 11, 12 has a smaller cross-section than the cross-section of the second passage of the second pair 18 of counter-rotating elements 13, 14, where the cross-section of a passage may be defined as the minimum distance between the counter-rotating elements forming a pair of counter-rotating elements.

In order to break and open a cartridge passing through a passage, the counter-rotating elements 11, 12, 13, 14 of each pair 17, 18 of counter-rotating elements are mutually coupled by at least one elastic element 15, 16 which may comprise at least one possibly helical spring and/or at least one elastically extensible tie-rod. In particular, the elastic elements 15, 16 are arranged so that the counter-rotating elements 11, 12, 13, 14 impart a compression force to a toner cartridge passing between the counter-rotating elements 11, 12, 13, 14 themselves.

In detail, the counter-rotating elements 11, 12 of the first pair 17 of counter-rotating elements 11, 12 are coupled by a first elastic element 15. Similarly, the counter-rotating elements 13, 14 of the second pair 18 of counter-rotating elements 13, 14, if present, are coupled by a second elastic element 16. In this way, it is possible to select the compression force that each pair 17, 18 of counter-rotating elements 11, 12, 13, 14 imparts to a toner cartridge. In particular, preferably the elastic elements 15, 16 are configured in such a way that the respective counter-rotating elements impart a compression force to a cartridge. Preferably, the elastic elements 15, 16 are configured in such a way that each pair 17, 18 of counter-rotating elements 11, 12, 13, 14 applies a pressure to a toner cartridge preferably between 3 and 7 bar, even more preferably between 4 and 6 bar. These pressure values allow the toner cartridges to be broken and opened, with the toner being released, without shattering the cartridge itself.

Preferably, the elastic elements 15, 16 are configured such that each pair 17, 18 of counter-rotating elements 11, 12, 13, 14 applies a pressure to a toner cartridge that is preferably less than 10 bar. Higher pressures would significantly increase the likelihood of starts of a fire.

According to a preferred embodiment moreover, the second pair 18 of counter-rotating elements 13, 14 is arranged in series with respect to said first pair 17 of counter-rotating elements 11, 12. In particular, in this way, a toner cartridge which, in use, passes through the first passage of the first pair 17 is subsequently directed into the second passage of the second pair 18 of counter-rotating elements 13, 14.

The apparatus 100 further comprises a separating device 20. Such separating device 20 is connected to the cartridge opening device 10 so as to receive open or broken toner cartridges from the latter. Further, the separating device 20 is configured to separate toner from a respective toner cartridge broken by the opening device 10 and to separately convey the latter to the second outlet opening 3 and the toner released from the broken toner cartridge to the first outlet opening 2.

Preferably, the separating device 20 comprises at least one filter element 21 and an actuating device 25 mechanically connected to the at least one filter element 21 to drive it in movement so as to implement, by means of the at least one filter element 21 itself, a sieving action of the material received from the opening device 10. In practice, the separating device 20 performs a sieving action of the toner and broken toner cartridges arriving from the opening device 10.

In particular, the at least one filter element 21 has a surface suitable for receiving toner and a toner cartridge broken by the opening device 10. Preferably, said surface of the at least one filter element 21 is substantially orthogonal to said main feed direction D.

Furthermore, the at least one filter element 21 is crossed by a plurality of passages extending from the surface of the filter element 21 itself and crossing the filter element 21. These passages are configured at the same time to allow toner, preferably in the form of powder and/or granules, to pass through them and to counter toner cartridge fragments from passing through them. According to an embodiment, each filter element of the at least one filter element 21 comprises - or consists of - a mesh or net filter.

Specifically, preferably the separating device 20 comprises a first filter element 21 and a second filter element 22. Such first and second filter elements 21, 22 are mutually arranged or positioned so that the material from the opening device may only reach the second filter element 22 after passing through the first filter element 21. In practice, the filter elements 21, 22 are arranged in series or in succession along the main feed direction D which may be straight for structural simplicity, of the separating apparatus 100, or follow a trajectory chosen according to the contingent requirements for implementing the present invention.

Preferably also, the second filter element 22 has a higher filtration capacity than the first filter element 21. That is to say, the first filter element 21 only allows particles having a particle size smaller than a first value to pass through it, while the second filter element 22 only allows particles having a particle size smaller than a second value to pass through it, wherein the second value is less than the first value. Preferably, according to an embodiment, the first filter element 21 is configured to retain toner cartridge fragments having a particle size greater than 4 mm, and the second filter element 22 is configured to retain toner cartridge fragments having a particle size greater than 2 mm.

Preferably, the actuating device 25 comprises a vibrator. Said vibrator is preferably connected to at least one and/or each filter element 21, 22 of said at least one filter element 21 in order to drive it in vibration. Preferably, the vibrator is connected to both said first filter element 21 and said second filter element 22. Preferably also, the vibrator is configured to generate vibrations having a frequency between 3 Hz and 5 Hz, preferably about 4 Hz, on the at least one vibrating element to which it is connected.

The vibrator may include a rotating hammer to generate impulsive impacts, preferably 250 pulses per minute.

Preferably, the separating device 20 further comprises at least one cleaning member 26. Such cleaning member 26 is configured to remove toner from toner cartridges broken by the opening device 10.

Preferably, said at least one cleaning member 26 faces the surface of the at least one filter element 21, 22 to remove toner from the cartridges broken by the opening device 10 and retained on said surface. Even more preferably, the at least one cleaning member 26 faces the surface of the first filter element 21. In this way, toner cartridges broken by the opening device 10 and which do not pass through the first filter element 21 are cleaned by such at least one cleaning member 26.

According to an embodiment, the at least one cleaning member 26 comprises at least one rotating brush, for example a cylindrical or drum-shaped rotating brush. According to an embodiment, the cleaning member comprises a pair of rotating brushes.

Preferably, such at least one rotating brush of the cleaning member 26 is housed in a recess 40a of the casing 40 of the apparatus 100. Preferably, said recess is at least partially flanked by the opening device 10 in such a way as to prevent a return of broken toner cartridges to said opening device 10. In other words, the opening device 10, and in particular said first and/or second passage defined by the counter-rotating elements 11, 12, 13, 14, does not directly face said recess of the casing 40 housing the at least one rotating brush of the cleaning member 26. This prevents a return of the broken cartridges to the opening device 10, for example in the direction opposite to the main feed direction D, following the action of the cleaning member 26 itself on the broken cartridges.

According to a preferred aspect, the apparatus 100 further comprises a compacting device 30. In particular, said compacting device 30 is connected to the separating device 20 so as to receive toner from the separating device 20 itself. In addition, the compacting device 30 is configured to compact toner, preferably at the first outlet opening 2, in order to limit the risk of ignition of the toner itself. Specifically, preferably the compacting device 30 is interposed between the separating device 20 and the first outlet opening 2 and is configured to compact toner received, in use, from the separating device 20 and convey it to the first outlet opening 2. According to a preferred embodiment, such compacting device 30 is a variable pitch screw, i.e., having a pitch that decreases towards the first outlet opening 2.

The invention as it is conceived is susceptible to numerous modifications and variants, all falling within the scope of protection of the appended claims.

In addition, all details may be replaced by other technically equivalent elements.

Where the operating and technical features mentioned in the following claims are followed by signs or reference numbers, the signs or reference numbers have been used only with the aim of increasing the intelligibility of the claims themselves and, consequently, they do not constitute in any way a limitation to the interpretation of each element identified, purely by way of example, by the signs or reference numerals.

## Claims

1. Apparatus (100) for extracting toner from a toner cartridge, said apparatus (100) comprising an inlet opening (1), a first outlet opening (2) for discharging toner, and a second outlet opening (3) for discharging toner cartridges, said apparatus (100) further comprising:
- a toner cartridge opening device (10) configured to break a toner cartridge so that the toner may be removed from inside said toner cartridge;
- a separating device (20) connected to said opening device (10) for receiving broken toner cartridges from said opening device, and configured to separate toner from a respective toner cartridge broken by said opening device (10), said separating device (20) being further configured to separately convey the broken toner cartridge to said second outlet opening (3) and toner separated from said broken toner cartridge to said first outlet opening (2);
- a compacting device (30) connected to said separating device (20) for receiving toner therefrom and configured to compact toner in such a way as to limit a risk of ignition thereof.

2. Apparatus (100) according to claim 1, wherein said compacting device (30) is interposed between said separating device (20) and said first outlet opening (2) and is configured to compact toner received, in use, from said separating device (20) and convey it to said first outlet opening (2).

3. Apparatus (100) according to one of the preceding claims, wherein said opening device (10) comprises at least one pair (17) of counter-rotating elements (11, 12) which between themselves define a first passage for a toner cartridge and which are configured to open a toner cartridge passing through said passage.

4. Apparatus according to claim 3, wherein said opening device (10) comprises:
- first pair (17) of counter-rotating elements (11, 12) of said at least one pair of counter-rotating elements,
- a second pair (18) of counter-rotating elements (13, 14) of said at least one pair of counter-rotating elements,
wherein said second pair (18) is arranged in series with respect to said first pair (17) in such a way that a toner cartridge which in use passes through the first passage of said first pair (17), is subsequently directed into a second passage defined between the counter-rotating elements (13, 14) of said second pair (18) of counter-rotating elements (13, 14).

5. Apparatus (100) according to claim 3 or 4, wherein the counter-rotating elements (11, 12, 13, 14) of each pair (17, 18) of counter-rotating elements are mutually coupled by at least one elastic element (15, 16) so that said counter-rotating elements impart a compression force to a toner cartridge passing between said counter-rotating elements (11, 12, 13, 14).

6. Apparatus (100) according to one of claims 3 to 5, wherein said counter-rotating elements (11, 12, 13, 14) comprise cylinders or grooved cylinders or consist of cylinders or grooved cylinders.

7. Apparatus (100) according to claims 4 and 6, wherein the diameter of the cylinders or grooved cylinders of said first pair (17) of counter-rotating elements (11, 12) is smaller than the diameter of the cylinders or grooved cylinders of said second pair (18) of counter-rotating elements (13, 14), and/or the first passage of said first pair (17) of counter-rotating elements (11, 12) has a smaller cross-section than a cross-section of the second passage of said second pair (18) of counter-rotating elements (13, 14).

8. Apparatus (100) according to any one of the preceding claims, wherein the separating device (20) comprises:
- at least one filter element (21) having a surface suitable for receiving toner and a toner cartridge broken by said opening device (10); said at least one filter element (21) being crossed by a plurality of passages extending from said surface and crossing said at least one filter element (21) and configured to allow toner to pass through them and to counter a passage, through them, of fragments of said toner cartridge;
- an actuating device (25) mechanically connected to said at least one filter element (21) to actuate the latter in movement so as to implement, by means of the latter, a sieving action of material received from said opening device (10).

9. Apparatus (100) according to the preceding claim, wherein said separating device (20) comprises a first filter element (21) of said at least one filter element (21) and a second filter element (22) of said at least one filter element (21); wherein said first filter element (21) and said second filter element (22) are mutually positioned in such a way that material coming from said opening device (10) may reach said second filter element (22) only following a passage through said first filter element (21).

10. Apparatus (100) according to the preceding claim, wherein said second filter element (22) has a filtration capacity greater than said first filter element (21), i.e. said first filter element (21) only allows particles having a particle size smaller than a first value to pass through it, wherein said second filter element (22) only allows particles having a particle size smaller than a second value to pass through it, wherein said second value is smaller than said first value.

11. Apparatus (100) according one of claims 8 to 10, wherein said actuating device (25) comprises at least one vibrator connected to each of said at least one filter element (22) for driving it into vibration and configured to generate vibrations having a frequency between 3 Hz and 5 Hz, and preferably about 4 Hz.

12. Apparatus (100) according to any one of the preceding claims, wherein said separating device (20) comprises at least one cleaning member (26) configured to remove toner from toner cartridges broken by said opening device (10).

13. Apparatus (100) according to claim 12 and one of claims 8 to 11, wherein said at least one cleaning member (26) is facing the surface of said at least one filter element (21) for removing toner from broken toner cartridges retained on said surface.

14. Apparatus (100) according to either of claims 12 or 13, wherein said at least one cleaning member (26) comprises at least one rotating brush.

15. Apparatus (100) according to one of the preceding claims, comprising:
- a casing (40) enclosing at least said separating device (20), possibly said opening device (10) and, if provided, said compacting device (30);
- a suction device placed in communication with the inside of said casing (40) to suck air from said casing in order to keep said apparatus under pressure towards the environment so as to prevent toner from being dispersed outside.

## Patentansprüche

1. Vorrichtung (100) zum Extrahieren von Toner aus einer Tonerkartusche, wobei die Vorrichtung (100) eine Einlassöffnung (1), eine erste Auslassöffnung (2) zum Ausgeben von Toner und eine zweite Auslassöffnung (3) zum Ausgeben von Tonerkartuschen umfasst, wobei die Vorrichtung (100) ferner umfasst:
- eine Tonerkartuschenöffnungsvorrichtung (10), die dazu ausgebildet ist, eine Tonerkartusche aufzubrechen, so dass der Toner aus dem Inneren der Tonerkartusche entnommen werden kann;
- eine Separiervorrichtung (20), die mit der Öffnungsvorrichtung (10) verbunden ist, um aufgebrochene Tonerkartuschen von der Öffnungsvorrichtung aufzunehmen, und die dazu konfiguriert ist, Toner von einer jeweiligen durch die Öffnungsvorrichtung (10) aufgebrochene Tonerkartusche zu separieren, wobei die Separiervorrichtung (20) ferner dazu konfiguriert ist, die aufgebrochene Tonerkartusche separiert zu der zweiten Auslassöffnung (3) und von der aufgebrochenen Tonerkartusche separierten Toner zu der ersten Auslassöffnung (2) zu befördern;
- eine Verdichtungsvorrichtung (30), die mit der Separiervorrichtung (20) verbunden ist, um Toner von dieser aufzunehmen, und die dazu konfiguriert ist, Toner derart zu verdichten, dass die Gefahr einer Entzündung desselben begrenzt ist.

2. Vorrichtung (100) nach Anspruch 1, wobei die Verdichtungsvorrichtung (30) zwischen der Separiervorrichtung (20) und der ersten Auslassöffnung (2) angeordnet ist und dazu ausgebildet ist, im Gebrauch von der Separiervorrichtung (20) empfangenen Toner zu verdichten und ihn zu der ersten Auslassöffnung (2) zu befördern.

3. Vorrichtung (100) nach einem der vorstehenden Ansprüche, wobei die Öffnungsvorrichtung (10) mindestens ein Paar (17) gegenläufiger Elemente (11, 12) umfasst, die zwischen sich einen ersten Durchgang für eine Tonerkartusche definieren und dazu konfiguriert sind, eine durch den Durchgang gehende Tonerkartusche zu öffnen.

4. Vorrichtung nach Anspruch 3, wobei die Öffnungsvorrichtung (10) umfasst:
- erstes Paar (17) gegenläufiger Elemente (11, 12) des mindestens einen Paars gegenläufiger Elemente,
- ein zweites Paar (18) gegenläufiger Elemente (13, 14) des mindestens einen Paars gegenläufiger Elemente,
wobei das zweite Paar (18) in Bezug auf das erste Paar (17) derart in Reihe angeordnet ist, dass eine Tonerkartusche, die im Gebrauch durch den ersten Durchgang des ersten Paars (17) läuft, anschließend in einen zweiten Durchgang geleitet wird, der zwischen den gegenläufigen Elementen (13, 14) des zweiten Paars (18) gegenläufiger Elemente (13, 14) definiert ist.

5. Vorrichtung (100) nach Anspruch 3 oder 4, wobei die gegenläufigen Elemente (11, 12, 13, 14) jedes Paars (17, 18) gegenläufiger Elemente durch mindestens ein elastisches Element (15, 16) miteinander gekoppelt sind, so dass die gegenläufigen Elemente eine Kompressionskraft auf eine Tonerkartusche ausüben, die zwischen den gegenläufigen Elementen (11, 12, 13, 14) hindurchgeht.

6. Vorrichtung (100) nach einem der Ansprüche 3 bis 5, wobei die gegenläufigen Elemente (11, 12, 13, 14) Zylinder oder Nutzylinder umfassen oder aus Zylindern oder Nutzylindern bestehen.

7. Vorrichtung (100) nach den Ansprüchen 4 und 6,
wobei der Durchmesser der Zylinder oder Nutzylinder des ersten Paars (17) gegenläufiger Elemente (11, 12) kleiner als der Durchmesser der Zylinder oder Nutzylinder des zweiten Paars (18) gegenläufiger Elemente (13, 14) ist, und/oder der erste Durchgang des ersten Paars (17) gegenläufiger Elemente (11, 12) einen kleineren Querschnitt aufweist als ein Querschnitt des zweiten Durchgangs des zweiten Paars (18) gegenläufiger Elemente (13, 14).

8. Vorrichtung (100) nach einem der vorstehenden Ansprüche, wobei die Separiervorrichtung (20) umfasst:
- mindestens ein Filterelement (21) mit einer Oberfläche, die für die Aufnahme von Toner und einer durch die Öffnungsvorrichtung (10) aufgebrochenen Tonerkartusche geeignet ist; wobei das mindestens eine Filterelement (21) von einer Vielzahl von Durchgängen durchzogen ist, die von der Oberfläche ausgehen und das mindestens eine Filterelement (21) durchqueren und so konfiguriert sind, dass sie den Durchgang von Toner durch sie ermöglichen und einem Durchgang von Fragmenten der Tonerkartusche durch sie entgegenwirken;
- eine Betätigungsvorrichtung (25), die mechanisch mit dem mindestens einen Filterelement (21) verbunden ist, um dieses in Bewegung zu versetzen, um mittels dieses eine Siebwirkung des von der Öffnungsvorrichtung (10) empfangenen Materials auszuführen.

9. Vorrichtung (100) nach dem vorstehenden Anspruch, wobei die Separiervorrichtung (20) ein erstes Filterelement (21) des mindestens einen Filterelements (21) und ein zweites Filterelement (22) des mindestens einen Filterelements (21) umfasst; wobei das erste Filterelement (21) und das zweite Filterelement (22) so zueinander positioniert sind, dass Material, das von der Öffnungsvorrichtung (10) kommt, das zweite Filterelement (22) nur nach einem Durchgang durch das erste Filterelement (21) erreichen kann.

10. Vorrichtung (100) nach dem vorstehenden Anspruch, wobei das zweite Filterelement (22) eine größere Filterkapazität als das erste Filterelement (21) aufweist, d. h. das erste Filterelement (21) lässt nur Partikel mit einer Partikelgröße kleiner als ein erster Wert durch, wobei das zweite Filterelement (22) nur Partikel mit einer Partikelgröße kleiner als ein zweiter Wert durchlässt, wobei der zweite Wert kleiner als der erste Wert ist.

11. Vorrichtung (100) nach einem der Ansprüche 8 bis 10, wobei die Betätigungsvorrichtung (25) mindestens eine Rüttelvorrichtung umfasst, die mit jedem der mindestens einen Filterelemente (22) verbunden ist, um sie in Schwingung zu versetzen, und die so konfiguriert ist, dass sie Schwingungen mit einer Frequenz zwischen 3 Hz und 5 Hz und vorzugsweise etwa 4 Hz erzeugt.

12. Vorrichtung (100) nach einem der vorstehenden Ansprüche, wobei die Separiervorrichtung (20) mindestens ein Reinigungselement (26) umfasst, das dazu ausgebildet ist, Toner aus Tonerkartuschen zu entfernen, die durch die Öffnungsvorrichtung (10) aufgebrochen wurden.

13. Vorrichtung (100) nach Anspruch 12 und einem der Ansprüche 8 bis 11, wobei das mindestens eine Reinigungselement (26) der Oberfläche des mindestens einen Filterelements (21) zugewandt ist, um Toner aus aufgebrochenen Tonerkartuschen zu entfernen, der auf dieser Oberfläche zurückgehalten wird.

14. Vorrichtung (100) nach Anspruch 12 oder 13, wobei das mindestens eine Reinigungselement (26) mindestens eine rotierende Bürste umfasst.

15. Vorrichtung (100) nach einem der vorstehenden Ansprüche, umfassend:
- ein Gehäuse (40), das mindestens die Separiervorrichtung (20), möglicherweise die Öffnungsvorrichtung (10) und, falls vorhanden, die Verdichtungsvorrichtung (30) umschließt;
- eine Saugvorrichtung, die mit der Innenseite des Gehäuses (40) in Verbindung steht, um Luft aus dem Gehäuse abzusaugen und so die Vorrichtung gegenüber der Umgebung unter Druck zu halten, um zu verhindern, dass Toner nach außen verteilt wird.

## Revendications

1. Appareil (100) d'extraction d'encre en poudre à partir d'une cartouche d'encre en poudre, ledit appareil (100) comprenant une ouverture d'entrée (1), une première ouverture de sortie (2) pour décharger l'encre en poudre, et une seconde ouverture de sortie (3) pour décharger les cartouches d'encre en poudre, ledit appareil (100) comprenant en outre :
- un dispositif d'ouverture de cartouche d'encre en poudre (10) conçu pour casser une cartouche d'encre en poudre afin que l'encre en poudre puisse être retirée de l'intérieur de ladite cartouche d'encre en poudre ;
- un dispositif de séparation (20) relié audit dispositif d'ouverture (10) pour recevoir des cartouches d'encre en poudre cassées à partir dudit dispositif d'ouverture, et conçu pour séparer l'encre en poudre d'une cartouche d'encre en poudre respective cassée par ledit dispositif d'ouverture (10), ledit dispositif de séparation (20) étant en outre conçu pour acheminer séparément la cartouche d'encre en poudre cassée vers ladite seconde ouverture de sortie (3) et l'encre en poudre séparé de ladite cartouche d'encre en poudre cassée vers ladite première ouverture de sortie (2) ;
- un dispositif de compactage (30) relié audit dispositif de séparation (20) pour recevoir de l'encre en poudre à partir de celui-ci et conçu pour compacter l'encre en poudre de manière à limiter un risque d'inflammation de celle-ci.

2. Appareil (100) selon la revendication 1, dans lequel ledit dispositif de compactage (30) est interposé entre ledit dispositif de séparation (20) et ladite première ouverture de sortie (2) et est conçu pour compacter l'encre en poudre reçu, lors de l'utilisation, à partir dudit dispositif de séparation (20) et l'acheminer vers ladite première ouverture de sortie (2).

3. Appareil (100) selon l'une des revendications précédentes, dans lequel ledit dispositif d'ouverture (10) comprend au moins une paire (17) d'éléments contrarotatifs (11, 12) qui définissent entre eux un premier passage pour une cartouche d'encre en poudre et qui sont conçus pour ouvrir une cartouche d'encre en poudre passant par ledit passage.

4. Appareil selon la revendication 3, dans lequel ledit dispositif d'ouverture (10) comprend :
- une première paire (17) d'éléments contrarotatifs (11, 12) de ladite au moins une paire d'éléments contrarotatifs,
- une seconde paire (18) d'éléments contrarotatifs (13, 14) de ladite au moins une paire d'éléments contrarotatifs,
dans lequel ladite seconde paire (18) est disposée en série par rapport à ladite première paire (17) de manière à ce qu'une cartouche d'encre en poudre qui, lors de l'utilisation, passe par le premier passage de ladite première paire (17), est ensuite dirigée dans un second passage défini entre les éléments contrarotatifs (13, 14) de ladite seconde paire (18) d'éléments contrarotatifs (13, 14).

5. Appareil (100) selon la revendication 3 ou 4, dans lequel les éléments contrarotatifs (11, 12, 13, 14) de chaque paire (17, 18) d'éléments contrarotatifs sont mutuellement accouplés par au moins un élément élastique (15, 16) de sorte que lesdits éléments contrarotatifs transmettent une force de compression à une cartouche d'encre en poudre passant entre lesdits éléments contrarotatifs (11, 12, 13, 14).

6. Appareil (100) selon l'une des revendications 3 à 5, dans lequel lesdits éléments contrarotatifs (11, 12, 13, 14) comprennent des cylindres ou des cylindres rainurés ou sont constitués de cylindres ou de cylindres rainurés.

7. Appareil (100) selon les revendications 4 et 6,
dans lequel le diamètre des cylindres ou des cylindres rainurés de ladite première paire (17) d'éléments contrarotatifs (11, 12) est inférieur au diamètre des cylindres ou des cylindres rainurés de ladite seconde paire (18) d'éléments contrarotatifs (13, 14), et/ou le premier passage de ladite première paire (17) d'éléments contrarotatifs (11, 12) a une section transversale inférieure à une section transversale du second passage de ladite seconde paire (18) d'éléments contrarotatifs (13, 14).

8. Appareil (100) selon l'une quelconque des revendications précédentes, dans lequel le dispositif de séparation (20) comprend :
- au moins un élément filtrant (21) ayant une surface apte à recevoir de l'encre en poudre et une cartouche d'encre en poudre cassée par ledit dispositif d'ouverture (10) ; ledit au moins un élément filtrant (21) étant traversé par une pluralité de passages s'étendant à partir de ladite surface et traversant ledit au moins un élément filtrant (21) et conçus pour permettre à l'encre en poudre de passer à travers ceux-ci et contrer un passage, à travers ceux-ci, de fragments de ladite cartouche d'encre en poudre ;
- un dispositif d'actionnement (25) relié mécaniquement audit au moins un élément filtrant (21) pour actionner ce dernier en mouvement afin de mettre en œuvre, au moyen de ce dernier, une action de tamisage du matériau reçu à partir dudit dispositif d'ouverture (10).

9. Appareil (100) selon la revendication précédente, dans lequel ledit dispositif de séparation (20) comprend un premier élément filtrant (21) dudit au moins un élément filtrant (21) et un second élément filtrant (22) dudit au moins un élément filtrant (21) ; dans lequel ledit premier élément filtrant (21) et ledit second élément filtrant (22) sont mutuellement positionnés de manière à ce que le matériau provenant dudit dispositif d'ouverture (10) ne puisse atteindre ledit second élément filtrant (22) qu'après être passé par ledit premier élément filtrant (21).

10. Appareil (100) selon la revendication précédente, dans lequel ledit second élément filtrant (22) a une capacité de filtration supérieure à celle dudit premier élément filtrant (21), c'est-à-dire que ledit premier élément filtrant (21) ne laisse passer que des particules ayant une taille de particule inférieure à une première valeur, dans lequel ledit second élément filtrant (22) ne laisse passer que les particules ayant une taille de particule inférieure à une seconde valeur, dans lequel ladite seconde valeur est inférieure à ladite première valeur.

11. Appareil (100) selon l'une des revendications 8 à 10, dans lequel ledit dispositif d'actionnement (25) comprend au moins un vibrateur relié à chacun desdits au moins un élément filtrant (22) pour le mettre en vibration et conçu pour générer des vibrations ayant une fréquence comprise entre 3 Hz et 5 Hz, et de préférence d'environ 4 Hz.

12. Appareil (100) selon l'une quelconque des revendications précédentes, dans lequel ledit dispositif de séparation (20) comprend au moins un élément de nettoyage (26) conçu pour retirer l'encre en poudre des cartouches d'encre en poudre cassées par ledit dispositif d'ouverture (10).

13. Appareil (100) selon la revendication 12 et l'une des revendications 8 à 11, dans lequel ledit au moins un élément de nettoyage (26) fait face à la surface dudit au moins un élément filtrant (21) pour éliminer l'encre en poudre des cartouches d'encre en poudre cassées retenues sur ladite surface.

14. Appareil (100) selon l'une des revendications 12 ou 13, dans lequel ledit au moins un élément de nettoyage (26) comprend au moins une brosse rotative.

15. Appareil (100) selon l'une des revendications précédentes, comprenant :
- un carter (40) renfermant au moins ledit dispositif de séparation (20), éventuellement ledit dispositif d'ouverture (10) et, s'il est fourni, ledit dispositif de compactage (30) ;
- un dispositif d'aspiration placé en communication avec l'intérieur dudit carter (40) pour aspirer l'air à partir dudit carter afin de maintenir ledit appareil sous pression vis-à-vis de l'environnement de manière à empêcher la dispersion de l'encre en poudre à l'extérieur.
